# EUROPEAN PATENT APPLICATION

(11) **EP 3 208 755 A1**
(43) Date of publication of application: **23.08.2017**
(21) Application number: 17156118.6
(22) Date of filing: 14.02.2017
(51) Int. Cl.: G06Q 10/00

(54) **INTERRELATION OF MULTIPLE DATA STREAMS**

(30) Priority: 16.02.2016 US 201615044249
(71) Applicant: Taleris Global LLP, Eastleigh, Hampshire SO53 4YG (GB)
(72) Inventor: VALI, Neal, Irving, TX 75039 (US); BAVINENI, Bharata, Irving, TX 75039 (US); GILLENWATER, Kent James, Irving, TX 75039 (US); MATTINGLY, William David, Irving, TX 75039 (US)
(74) Representative: Williams, Andrew Richard

(57) **Abstract**

Systems 100 and methods 400 for correlating and tagging asset-related data streams, such as multiple streams of aviation-related data 104, 106, 108, 110, are provided. More particularly, systems and methods can be used to provide 402 one or more portions of asset-related data as input text to a natural language processing engine 116 to identify 404 one or more data entities within the asset-related data streams. One or more processing rules can be generated 408 for applying information in the form of tagging keywords and/or data entity relationships to the data entities. The one or more processing rules can be stored 410 as part of a statistical model for evaluating subsequent portions of asset-related data and providing analy zed data and generated tags/relationships for display to a user.

## Description

### FIELD

The present subject matter relates generally to interrelation of multiple data streams, and more particularly to tagging and correlation of data within aviation-related data systems and other asset-related applications.

### BACKGROUND

Vast quantities of data are generally available related to performance tracking for transportation fleets and individual assets. For example, the aviation industry gathers aircraft operational data from a variety of particular sources. Data can be collected from aircraft via Quick Access Recorders (QARs), which can provide airborne recordation of raw flight data parameters received from a number of aircraft sensors and avionic systems. Data can be collected from maintenance records from an airline's Maintenance, Repair and Overhaul (MRO) systems. Data also can be collected from pilot reports or Aircraft Condition Monitoring Systems (ACMS) communications. Still further, Aircraft Communications Addressing and Reporting System (ACARS) messages can include relevant data including aircraft movement events, flight plans, weather information, equipment health, status of connecting flights, and the like.

Predictive analysis of aircraft operational data can offer useful information for maintenance and prognostics for individual aircraft or entire fleets. Many existing systems rely primarily on human interpretation of these vast amounts of data, which can be cumbersome, tedious and time consuming. In addition, enterprise-level analytic systems that consume multiple data streams can sometimes require a composite view of all available data for an asset. Knowledge inferred from such a composite view can be required to build an accurate situational awareness picture for a fleet of assets. These known options can yield limited accuracy and effectiveness in making intelligent decisions about maintenance actions to take and the urgency of taking those actions.

### BRIEF DESCRIPTION

Aspects and advantages of the present disclosure will be set forth in part in the following description, or may be learned from the description, or may be learned through practice of the examples disclosed herein.

One example aspect of the present disclosure is directed to a computer-implemented method for interrelation of multiple streams of asset-related data. The method can include providing, by one or more processors, one or more portions of data from a plurality of asset-related data streams as input text to a natural language processing engine. The method can further include identifying, by the one or more processors, one or more data entities within the asset-related data streams using the natural language processing engine. The method can further include generating, by the one or more processors, one or more processing rules for applying information to the data entities identified within the asset-related data streams. The method can further include storing, by the one or more processors, the one or more processing rules as part of a statistical model for evaluating subsequent portions of asset-related data for performance of one or more maintenance events.

Another example aspect of the present disclosure is directed to a system for interrelation of multiple streams of asset-related data. The system can include one or more processors and one or more memory devices. The one or more memory devices can store computer-readable instructions that when executed by the one or more processors cause the one or more processors to perform operations. The operations can include providing one or more portions of data from a plurality of asset-related data streams as input text to a natural language processing engine. The operations can further include identifying one or more data entities within the asset-related data streams using the natural language processing engine. The operations can further include generating one or more processing rules for applying information to the data entities identified within the asset-related data streams. The operations can further include storing the one or more processing rules as part of a statistical model for evaluating subsequent portions of asset-related data for performance of one or more maintenance events.

Variations and modifications can be made to these example aspects of the present disclosure.

These and other features, aspects and advantages of various examples will become better understood with reference to the following description and appended claims. The accompanying drawings, which are incorporated in and constitute a part of this specification, illustrate aspects of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an overview of an example data tagging and correlation system according to example embodiments of the present disclosure;
FIG. 2 depicts an example schematic of data flow in data tagging and correlation systems and methods according to example embodiments of the present disclosure;
FIG. 3 depicts an example overview of system components for implementing data tagging and correlation features according to example aspects of the present disclosure;
FIG. 4 depicts tagging features for use with data tagging and correlation systems and methods according to example embodiments of the present disclosure;
FIG. 5 depicts relationship tagging features for use with data tagging and correlation systems and methods according to example embodiments of the present disclosure;
FIG. 6 depicts an example graphical user interface that provides visualization of aggregated maintenance data for display according to example embodiments of the present disclosure;
FIG. 7 depicts an example graphical user interface that shows a detailed portion of the graphical user interface from FIG. 6, particularly illustrating operational events and maintenance events tracked over a period of time according to example embodiments of the present disclosure;
FIG. 8 depicts an example graphical user interface that provides tag alert features for display according to example embodiments of the present disclosure;
FIG. 9 depicts an example graphical user interface that provides faults and warnings features for display according to example embodiments of the present disclosure;
FIG. 10 depicts an example graphical user interface that provides characterization panel features according to example embodiments of the present disclosure;
FIG. 11 depicts an example graphical user interface that provides features for new tag type creation according to example embodiments of the present disclosure;
FIG. 12 depicts a flow chart of an example method of providing for interrelation of multiple data streams according to example embodiments of the present disclosure;
FIG. 13 depicts a flow chart of an example method of processing multiple streams of asset-related data according to example embodiments of the present disclosure; and
FIG. 14 depicts a flow chart of an example method for visualization of aggregated maintenance data for a plurality of aircraft according to example embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Example aspects of the present disclosure are directed to systems and methods for interrelation of multiple data streams associated with composite analytics for a fleet of assets, such as aircraft or the like. Some example embodiments can provide features for building a closed-loop system capable of combining quantitative input in the form of machine learning with qualitative input in the form of user instructions for automated analysis of multiple data streams. These features can serve as part of a data tagging and correlation framework. In this way, example aspects of the present disclosure can have a technical effect of providing a robust and extensible data analysis pipeline that leverages rules engine capability and natural language processing to extract meaning from free text input to identify data entities and to correlate identified relationships among data entities in the system.

Automated generation of facts and information about an asset or fleet of assets can have a technical effect of providing meaningful outputs to assist with making intelligent decisions regarding operations and reliability of a fleet of assets. In some examples, processing rules developed according to the disclosed techniques can have a technical effect of implementing tagging of faults and warnings within post-flight report (PFR) data. In some examples, maintenance, repair and operations (MRO) data can be processed and correlated to provide meaningful output information. Identified and generated datasets, rules, tagged data and/or resulting analytics can be provided for display to a user via an interactive user interface or other display options.

In one example implementation, a method for interrelation of multiple data streams can include the application of multiple data streams of asset-related data to a processing pipeline that includes natural language processing algorithms and/or business rule processing algorithms. In some examples, the asset-related data can correspond to aviation-related data including but not limited to aircraft faults and warnings data, post-flight report data, and/or aircraft maintenance report data.

The natural language processing algorithm can receive one or more portions of asset-related data as input and identify one or more data entities from free input text contained in the data streams. In some examples, the natural language processing algorithm also can identify one or more relationships among the identified data entities. One or more processing rules can be generated for applying information to the identified data entities. In some examples, the processing rules can include tagging rules for associating one or more keywords to one or more data entities identified within the asset-related data streams. In some examples, the processing rules can include relationship rules for identifying relationships among two or more data entities identified within the asset-related data streams. The generated processing rules can be stored as part of a statistical model for evaluating subsequent portions of asset-related data.

The statistical model can be developed at least in part by machine learning processes that receive datasets of asset-related data and corresponding processing rules. These datasets are used to help train classifiers for processing subsequent portions of asset-related data. In some examples, the datasets provided as input to the statistical model include asset-related data (e.g., identified data entities) and associated user instructions for tagging or correlating the identified portions of the asset-related data. These correlated associations between data and tagging or relationship rules can be used to generate additional processing rules for further development of a statistical model for analyzing subsequent data. In examples that combine both machine learning and user input, a flexible and robust system can facilitate both the manual and automated extraction of knowledge from asset-related data.

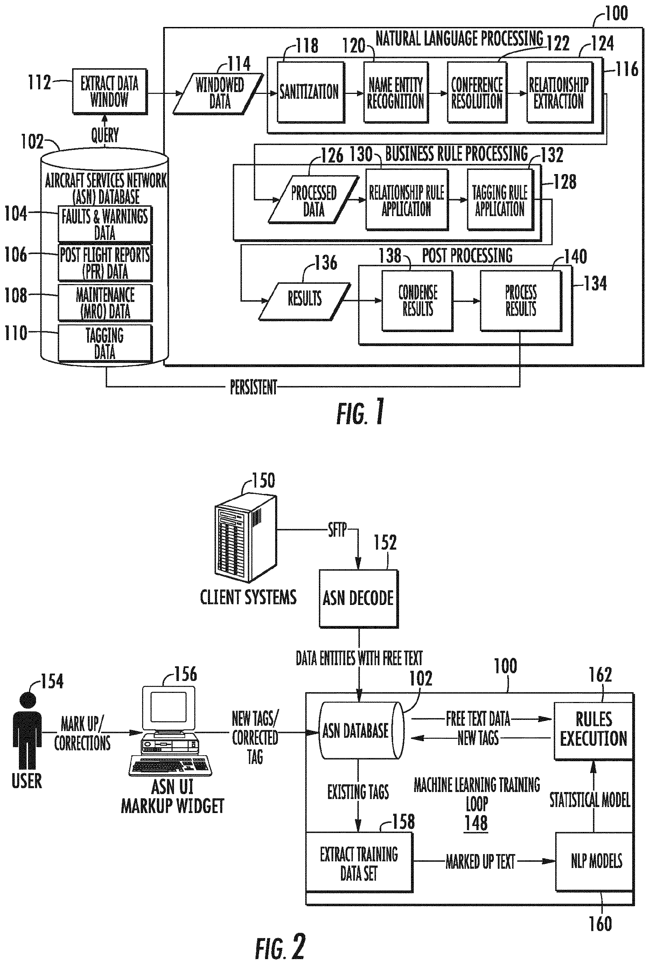

Referring now to the FIGS., FIG. 1 depicts an example overview of a data tagging and correlation system 100. One or more data streams can be provided in electronic form as digital input to the data tagging and correlation system 100. In the example of FIG. 1, multiple streams of data are available from a collective Aircraft Services Network (ASN) database 102. Database 102 includes several streams of data, including but not limited to Faults and Warnings Data 104, Post-Flight Reports (PFR) Data 106, Maintenance, Repair and Operations (MRO) Data 108 and Tagging Data 110.

Data available within the ASN Database 102 can be collected from a variety of particular sources maintained by one or more particular airlines, by general aviation tracking systems, by third party data collection and analysis entities authorized by an airline or other organization to track relevant data, or other entities. For instance, Faults and Warnings Data 104 can be collected from aircraft via Quick Access Recorders (QARs), which can provide airborne recordation of raw flight data parameters received from a number of aircraft sensors and avionic systems. Post-Flight Reports (PFR) Data 106 can include an electronic form of data that is collected automatically from aircraft systems and/or from information provided by pilot data entry that is pertinent for tracking customized information about particular aircraft flights. MRO Data 108 can be collected from maintenance records from an airline's Maintenance, Repair and Overhaul (MRO) systems. Tagging Data 110 can include different predetermined tagging options that can be employed by various processing algorithms to label keywords and define relationship for identified data entities. Tagging Data 110 also can include datasets of correlated items, including data entities and associated keyword tags or relationship tags that can be used as training input for machine learning of statistical models that define various processing algorithms. Data streams provided within ASN Database 102 can come from still further sources, including but not limited to pilot reports, Aircraft Condition Monitoring Systems (ACMS), and/or Aircraft Communications Addressing and Reporting System (ACARS) messages that include relevant data such as aircraft movement events, flight plans, weather information, equipment health, status of connecting flights, and the like.

Referring still to FIG. 1, data from ASN database 102 can be provided in response to a system query to a data extraction and windowing algorithm 112. Data extraction and windowing algorithm 112 can include processing instructions configured to extract data objects from within each data stream provided from ASN Database 102. Data windowing also can be implemented by defining one or more time ranges for comparison against date and time stamps for data available within various data streams or extracted data objects. Identification of data objects can be tailored based on the type of data stream or database and/or the type of data storage configuration that is being analyzed by the data extraction and windowing algorithm 112. Lists of collections, lists of query templates, and/or mappings of key and data type pairs, which can be applied to find expressions or queries, can be stored within data extraction and windowing algorithm 112 to facilitate data object identification. By identifying select portions of data from data streams in database 102, data extraction and windowing algorithm 112 can extract meaningful subsets of data which ultimately can be relayed to the data tagging and correlation system 100.

Windowed data 114 extracted from data streams via data extraction and windowing algorithm 112 can be provided to natural language processing engine or algorithm 116. Natural language processing engine or algorithm 116 can generally involve the interpretation of natural language input or free text input from asset-related data streams. Natural language processing engine 116 can include one or more particular operational items, including a sanitization operation 118, a name entity recognition operation 120, a co-reference resolution operation 122 and a relationship extraction operation 124.

Sanitization operation 118 is configured to perform spelling corrections and remove or replace irrelevant characters within free text fields that are provided as part of the asset-related data streams from ASN database 102. Customizable sanitization processing rules can use example datasets to update probability models for tokenizing free text and filtering out unwanted results.

Name entity recognition operation 120 can include a process of identifying one or more data entities from text within various asset-related data streams. In the case of data streams from ASN database 102, example data entities for potential identification can include but are not limited to aircraft systems and subsystems, part numbers and names, aircraft tail numbers, aviation abbreviations, task numbers, actions, problems, and/or relationships among these entities and others. Customizable dictionaries can be stored for access by name entity recognition operation 120 to assist with the identification of entities that use terms common to the native language (e.g., English) of the system. Additional dictionaries can be customized to help handle domain specific entities by storing data entries for known entities that may not be common to a native language. Dictionaries also can store related synonyms used for resolving co-reference data within co-reference resolution operation 122.

Co-reference resolution operation 122 can identify when a particular data entity is co-referenced by other mentions within input text including pronouns, abbreviations or the like. In some cases, plural pronouns can be identified as co-referencing multiple data entities in the input text.

Relationship extraction operation 124 can identify relationships among different data entities identified via name entity recognition operation 120 and/or co-referenced mentions of data entities identified via co-reference resolution operation 122. Identification of relationships via relationship extraction operation 124 can be facilitated at least in part by part of speech tagging and/or phrase grouping. Part of speech tagging can label input text based on definition and context, while phrase grouping collects tokens and part of speech tags into related groups such as phrases.

The natural language processing algorithm 116 can advantageously offer a flexible system that can be readily updated to accommodate advancing capabilities and competencies of newly emerging natural language processing rules engines. Additional advantages can be realized in part when the natural language processing algorithm 116 is accomplished via machine learning processes. Such processes can be periodically or incrementally trained to maintain and enhance the accuracy of results. This training can be accomplished via user feedback and actions which can be translated and formatted into consumable datasets for the algorithms.

Processed data 126 can be received as output from the natural language processing engine 116 and provided as input to a business rule processing algorithm 128. Business rule processing engine 128 can include a relationship rule application 130 and a tagging rule application 132. In general, the processing rules provided within business rule processing engine 128 can continuously evolve as part of a statistical model that is progressively updated as new data is made available to the system. As such, business rule processing engine 128 can be configurable to facilitate maximum extensibility and also to support rules that are unique to specific customers and/or asset data. Business rule processing engine 128 also can be provided with linked access to particular libraries or dictionaries defining various data entities and relationships among those entities, similar to the dictionaries available to natural language processing engine 116.

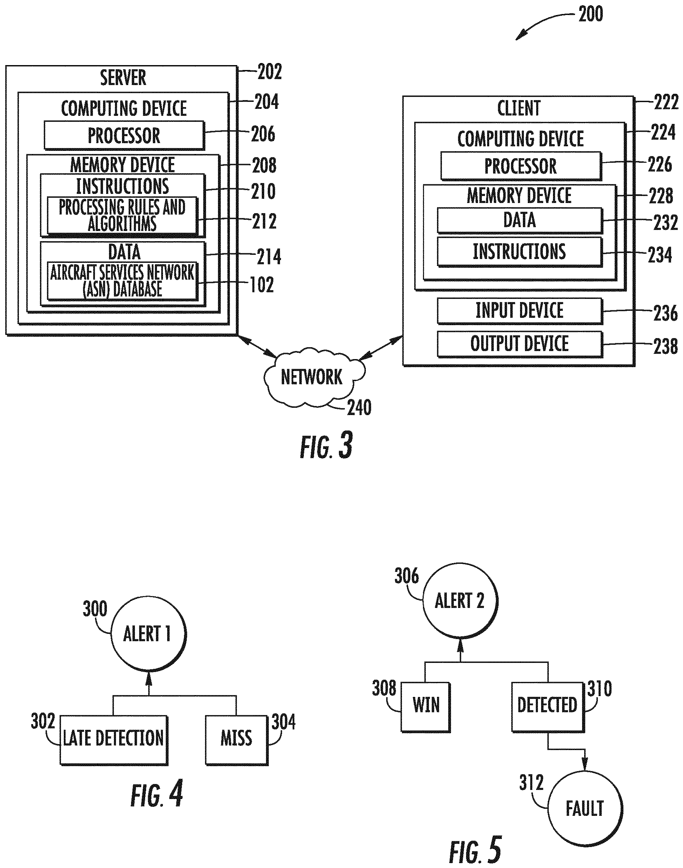

Relationship rule application 130 corresponds to an algorithm of computer-executed operations that are configured to define relationships between one identified data entity and another. The data entities for which relationships can be defined can correspond to the data entities identified within the natural language processing algorithm 116. For example, relationship rule application 130 can provide a framework for automatically relating alerts to faults or other relevant entries from Post-Flight Report (PFR) data. In other examples, configurable processing rules can provide a framework for automatically correlating alerts with MRO data entries. An additional example of relationship tagging rules is illustrated in FIG. 5.

Tagging rule application 132 corresponds to an algorithm of computer-executed operations that are configured to apply one or more tags, or keywords, to an entity. The types of tags or keywords available to associate with an entity can be predetermined or customizable. Some examples of available tags within aviation data can serve to implement data tagging of faults and warnings from post-flight report data. Pre-defined tags in such examples can include indicators such as but not limited to "Undetectable," "Undetected," and "Out of Scope." Another example involves tagging of a maintenance defect as a "Miss." An additional example of tagging rules is illustrated in FIG. 4.

Additional user-defined tagging criteria also can be utilized. General tags also can be available to facilitate troubleshooting and notification of poor data quality. For example, a "Requires Manual Attention" tag can be used to indicate either an error while processing or the successful execution of a business rule designed to detect problems in the data. In another example, an "Indecipherable" tag can be used to indicate that the underlying data is indecipherable and thus cannot be processed. An example application of the "Indecipherable" tag would be for free text with no recognizable data entities.

In some examples, data tagging and correlation system 100 can include a post processing algorithm 134 that serves to update the system 100 with processing rules that are identified in the natural language processing algorithm 116 and/or the business rule processing algorithm 128. For example, when processing rules including tagging rules and/or relationship rules are developed within the business rule processing algorithm 128, those operational rules can be added to working memory within ASN database 102 so that the processing rules are available for subsequent data processing on a persistent basis. Results 136 from the business rule processing algorithm 128 can be further condensed in a condense results operation 138 or processed in a process results operation 140 to yield a proper form for storing within ASN database 102. In some examples, the processing rules are stored within ASN database 102 as part of a statistical model for evaluating subsequent portions of asset-related data.

Referring now to FIG. 2, additional aspects of data flow within a data tagging and correlation system 100 are depicted in schematic form. FIG. 2 illustrates example sources of data that are received, stored within ASN database 102, and ultimately processed within data tagging and correlation system 100. FIG. 2 also depicts a system that provides features for tagging and relating data via two distinct manners that can be integrated into a single, cohesive approach. One manner can involve a rules-based engine 148 implemented by a machine learning training loop for programmatically extracting relationships and labeling data entities. Another manner can involve a user interface 156 for capturing manual observations on data entities including various tags and relations.

Client systems 150 can correspond to computing devices and related storage databases for gathering and collecting data specific to the operational assets of a particular client, such as an airline or the like. Data from client systems 150 can be relayed via a Secure File Transfer Protocol (SFTP) process to an ASN Decoder 152. ASN Decoder 152 can be configured to decode larger text fields with varying degrees of structure depending on the particular type of analyzed assets and the particular client system 150. For example, in ASN database analysis, ASN Decoder 152 can be configured to decode fields including but not limited to Faults, Warnings and Maintenance Messages.

User 154 can correspond to one or more engineers, technicians, managers, or other specialists within an airline maintenance organization who help solve various aircraft maintenance problems. Such a user 154 can be provided with access to the data tagging and correlation system 100 through an ASN user interface and markup widget 156. Via the user interface 156, users can tag and relate the various data entities identified in the system with predefined system tags and/or user-defined tags. In particular, users 154 can enter mark-ups and/or corrections via user interface 156 that result in the identification of new data entities, corrected data entities, new tags or corrected tags for storing within the ASN database 102. This capability of providing instructional information via the user interface 156 can support the derivation of datasets which can be used to drive machine learning and derive processing rules for algorithms within the rules-based engine 148. Example actions that can be implemented via user instructions provided at user interface 156 include tagging identified alerts as having "No Value," tagging identified faults as "Out of Scope" or "Undetected," and/or relating alerts to relevant Fault, Warning and/or MRO data.

Rules based engine 148 can more particularly include a statistical model formulated by a machine learning training loop that identifies processing rules as training classifiers for processing of subsequent portions of asset-related data. As shown in FIG. 2, existing tags from ASN database 102 can be combined with corresponding text strings that are identified as being linked to existing tags via training data set extractor 158. To help facilitate accurate training, training data set extractor 158 can select as training data those tags that are either manually created or tags that are attached to entities which are marked as correct or accurate. Marked up text including identified text strings and associated tags then can be provided as part of natural language processing (NLP) models 160. NLP models 160 help define the processing rules for use within natural language processing algorithm 116. The updated NLP models 160 then can be made available to the rules execution engine 162, which can incorporate the updated NLP models 160 into business rule processing algorithm 128 or update existing use of the natural language processing algorithm 116 to provide greater accuracy and consistency.

FIG. 3 depicts a computing system 200 that can be used to implement methods and systems for tagging and correlation of data within aviation-related data systems and other asset-related applications. The system 200 can be implemented using a client-server architecture that includes a server 202 and one or more clients 222. Server 202 may correspond, for example, to a web server hosting a data tagging and correlation application. Client 222 may correspond, for example, to a web server providing client system data such as client system 150 of FIG. 2 or a computing device operated by a user 154 and hosting user interface 156, also shown in FIG. 2.

Each server 202 and client 222 can include at least one computing device, such as depicted by server computing device 204 and client computing device 224. Although only one server computing device 204 and one client computing device 224 is illustrated in FIG. 3, multiple computing devices optionally may be provided at one or more locations for operation in sequence or parallel configurations to implement the disclosed methods and systems of data tagging and correlation. In other examples, the system 200 can be implemented using other suitable architectures, such as a single computing device. Each of the computing devices 204, 224 in system 200 can be any suitable type of computing device, such as a general purpose computer, special purpose computer, laptop, desktop, mobile device, smartphone, tablet, wearable computing device, a display with one or more processors, or other suitable computing device.

The computing devices 204 and/or 224 can respectively include one or more processor(s) 206, 226 and one or more memory devices 208, 228. The one or more processor(s) 206, 226 can include any suitable processing device, such as a microprocessor, microcontroller, integrated circuit, logic device, one or more central processing units (CPUs), graphics processing units (GPUs) dedicated to efficiently rendering images or performing other specialized calculations, and/or other processing devices. The one or more memory devices 208, 228 can include one or more computer-readable media, including, but not limited to, non-transitory computer-readable media, RAM, ROM, hard drives, flash drives, or other memory devices. In some examples, memory devices 208, 228 can correspond to coordinated databases that are split over multiple locations.

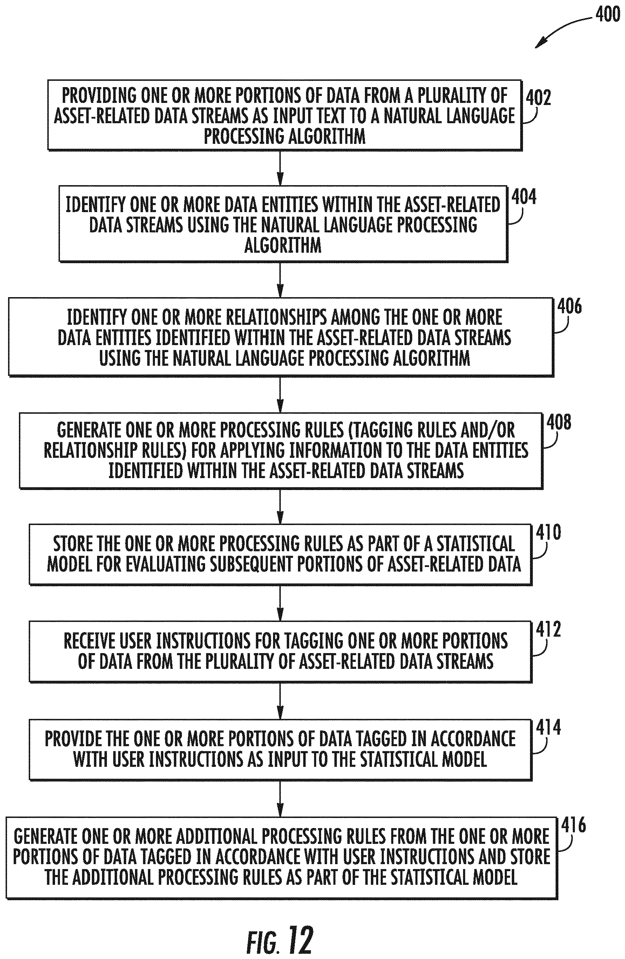

The one or more memory devices 208, 228 store information accessible by the one or more processors 206, 226, including instructions that can be executed by the one or more processors 206, 226. For instance, server memory device 208 can store instructions 210 for implementing processing rules, operations and algorithms 212 for performing various functions disclosed herein. In some examples, processing rules and algorithms 212 can include but are not limited to the natural language processing algorithm 116, business rule processing algorithm 128 and post-processing algorithm 134 depicted in FIG. 1. In other examples, processing rules and algorithms 212 implement the functions set forth in the flow charts of FIGS. 12-14. The client memory device 228 can store instructions for implementing a browser or application that allows a user to request information from server 202, including specific asset-related data queries, data tagging information and the like. The one or more memory devices 208, 228 can include data 212, 232 that can be retrieved, manipulated, created, or stored by the one or more processors 206, 226. The data 214 stored at server 202 can include, for instance, ASN database 102 or other databases for storing information from asset-related data streams and other sources.

Computing devices 204 and 224 can communicate with one another over a network 240. In such instances, the server 202 and one or more clients 222 can respectively include a network interface used to communicate with one another over network 240. The network interface(s) can include any suitable components for interfacing with one more networks, including for example, transmitters, receivers, ports, controllers, antennas, or other suitable components. The network 240 can be any type of communications network, such as a local area network (e.g. intranet), wide area network (e.g. Internet), cellular network, or some combination thereof. The network 240 also can include a direct connection between server computing device 204 and client computing device 224. In general, communication between the server computing device 204 and client computing device 224 can be carried via network interface using any type of wired and/or wireless connection, using a variety of communication protocols (e.g. TCP/IP, HTTP, SMTP, FTP), encodings or formats (e.g. HTML, XML), and/or protection schemes (e.g. VPN, secure HTTP, SSL).

The client 222 can include various input/output devices for providing and receiving information to/from a user. For instance, an input device 236 can include devices such as a touch screen, touch pad, data entry keys, and/or a microphone suitable for voice recognition. Input device 236 can be employed by a user to provide marked up text and user-defined data for entities, tags or other components of the disclosed data tagging and correlation systems. An output device 238 can include audio or visual outputs such as speakers or displays for indicating data tagging and correlation outputs, user interfaces, and the like.

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein may be implemented using a single server or multiple servers working in combination. Databases and applications may be implemented on a single system or distributed across multiple systems. Distributed components may operate sequentially or in parallel.

It will be appreciated that the computer-executable algorithms described herein can be implemented in hardware, application specific circuits, firmware and/or software controlling a general purpose processor. In one embodiment, the algorithms are program code files stored on the storage device, loaded into one or more memory devices and executed by one or more processors or can be provided from computer program products, for example computer executable instructions, that are stored in a tangible computer-readable storage medium such as RAM, flash drive, hard disk, or optical or magnetic media. When software is used, any suitable programming language or platform can be used to implement the algorithm.

FIG. 4 depicts an example of tagging features for use with processing algorithms for implementing data tagging and correlation. In general, tags can be viewed as one or more keywords that can be associated with one or more identified data entities. In some examples, tags can additionally or alternatively include values to indicate a magnitude associated with the tagged keyword and/or the underlying data entity. In the example of FIG. 4, "Alert 1" is identified as a data entity 300 within a system. Processing rules within algorithm 128 can be configured to tag the "Alert 1" data entity 300 with a first tag 302 identifying "Alert 1" as a "Late Detection" and/or with a second tag 304 identifying "Alert 1" as a "Miss."

Tags can serve as both output and input into the algorithmic framework of business rule processing algorithm 128. In some examples, business rule processing algorithm 128 applies preconfigured rules to produce tags as an output relative to various data entities. In some examples, users can assign tags as input associated with identified data entities using the user interface 156. In the latter examples, the user-inputted tags and associated data entities then can be packaged into datasets used for training the processing algorithm using a statistical model.

FIG. 5 depicts an example of relationship tagging features for use with processing algorithms for implementing data tagging and correlation. Relationship tags are another form of tag that indicates a relationship between two or more entities. In general, relationship tags can be utilized to build relationships-based node graphs across several entities. In the context of aircraft services network (ASN) data, relationship tags can be utilized to create user-definable relationships between entities in the system, including for relationships which may not be defined by existing data correlation arrangements. In the example of FIG. 5, data entity 306 identified as "Alert 2" can be associated with a first keyword tag 308 "Win" as well as a second keyword tag 310 "Detected." Because data entity 306 "Alert 2" was tagged as "Detected," a relationship tag 312 is also established to correlate data entity "Alert 2" as a "Fault."

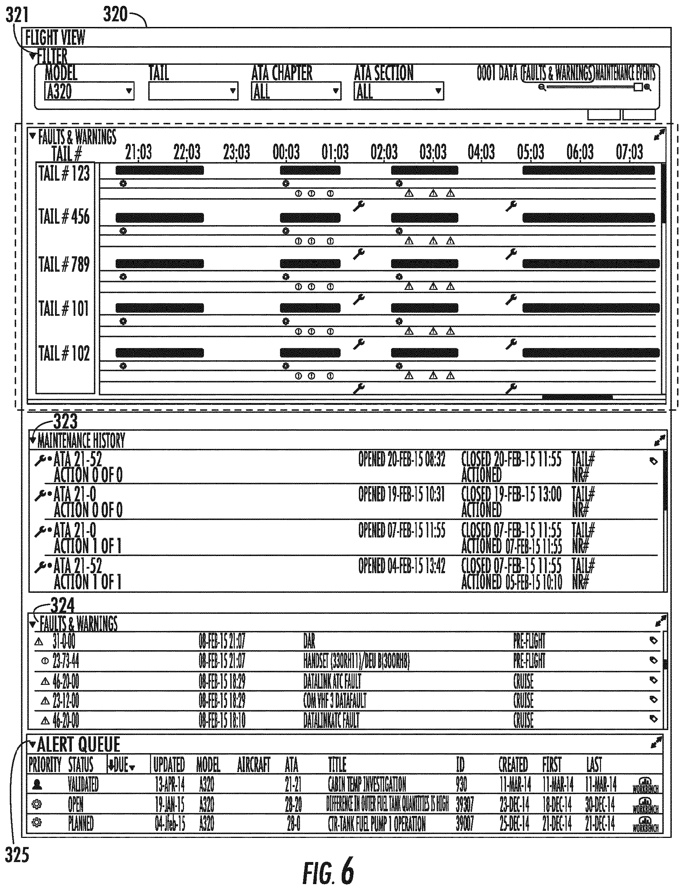

Referring now to FIGS. 6-11, various user interfaces can be available as part of the disclosed asset-related data processing and visualization. The user interfaces provided herein are presented as non-limiting examples. It should be appreciated that variations to the form and style of substantive features and data provided within the example user interfaces depicted herein are within the scope of the disclosed technology.

FIG. 6 depicts an example graphical user interface that provides visualization of aggregated maintenance data for display according to example embodiments of the present disclosure. The aggregated maintenance data available via user interface 320 is provided within the context of aggregated data for aircraft, although it should be appreciated that similar data and interfaces can be implemented for other assets or fleets of assets. In some examples, aggregated maintenance data available via user interface 320 can come from data streams provided via an ASN database 102 as discussed with reference to FIGS. 1 and 2.

User interface 320 of FIG. 6 includes a plurality of interface portions directed to respective portions of aggregated maintenance data, for example, a "Filter" interface portion 321, a first "Faults and Warnings" interface portion 322, a "Maintenance History" portion 323, a second "Faults and Warnings" interface portion 324, and an "Alert Queue" interface portion 325. The data available within various interface portions of user interface 320 can be defined relative to a particular aircraft (e.g., by aircraft model and/or tail number), relative to particular dates and/or times (e.g., dates that a maintenance event is opened and closed, dates and times of occurrence for particular faults and warnings, dates for alert creation, updates and/or statuses), and/or relative to particular instances of a type of data (e.g., a type of fault, warning, maintenance event or alert.)

The visualization provided within user interface 320 of FIG. 6 can provide a single view of data aggregated from multiple data sources. An ability to show events in time and provide navigation to more detailed information can be streamlined and simple for a system user. For users who are already accustomed to data types common in aircraft reliability programs, systems and methods according to example aspects of the present disclosure can afford a very intuitive visualization that requires minimal user training and provides value to many different roles in an airline maintenance organization. Although not illustrated, the user interface 320 or selected portions thereof also can include keyword tags and relationship tags as illustrated and discussed with reference to the disclosed data tagging and correlation features.

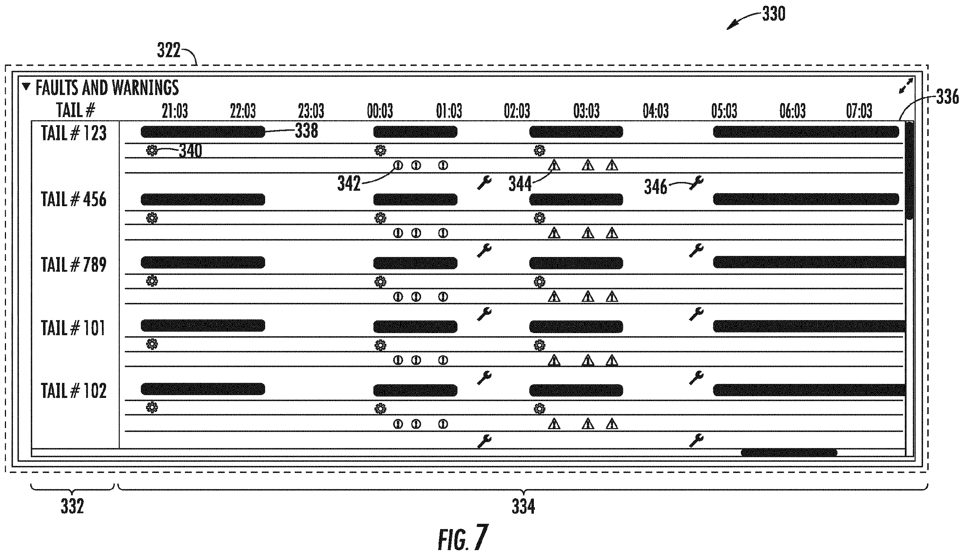

FIG. 7 depicts an example graphical user interface 330 that includes a detailed portion of the graphical user interface from FIG. 6, particularly corresponding to the first "Faults and Warnings" interface portion 322 of FIG. 6. In general, user interface 330 depicts operational events and maintenance events tracked over a period of time for a plurality of aircraft. User interface 330 includes a first interface portion 332 corresponding to particular aircraft and a second interface portion 334 corresponding to particular operational events and maintenance events for the aircraft identified in each row of first interface portion 332. Second interface portion 334 displays identified events, including operational events and/or maintenance events over a period of time, represented in FIG. 7 along a linear timeline 336 of regularly spaced time intervals. The spaced intervals within linear timeline 336 are defined per hour, although it should be appreciated that other time intervals include multiple hours or portions of a single hour or day also can be used in a timeline-based approach.

In general, the format of events tracked along a period of time as depicted in FIG. 7 is can be implemented in a time-tracked chart such as but not limited to a Gantt chart. The chart provided within user interface 330 displays maintenance events in-line with aircraft flights or other operational events tracked over a period of time. From a flight data perspective, this visualization method can provide a user with an ability to navigate all the way down to individually recorded aircraft parameters at the original captured frequency.

The operational events identified within user interface 330 of FIG. 7 particularly correspond to distinct aircraft flights per aircraft. Each aircraft flight is represented in FIG. 7 as a bar 338 whose time span is defined between a flight start time and a flight end time. As shown, multiple distinct flights can be tracked for each aircraft during a particular day, multiple days, or portions thereof. Identified maintenance events are also tracked along the same linear timeline 336. A first icon type 340 can be depicted along timeline 336 to represent maintenance events corresponding to identified aircraft maintenance alerts. A second icon type 342 can be depicted along timeline 336 to represent maintenance events corresponding to identified aircraft faults. A third icon type 344 can be depicted along timeline 336 to represent maintenance events corresponding to identified aircraft warnings. A fourth icon type 346 can be depicted along timeline 336 to represent maintenance events corresponding to identified maintenance tasks or actions. The icons 340-346 used to represent maintenance events and optionally the bars used to represent operational events in FIG. 7 can be configured as user-selectable interface elements or icons. Upon user selection of these elements/icons, additional information related to the operational or maintenance event corresponding to the selected interface element can be provided for display, such as shown in FIG. 6.

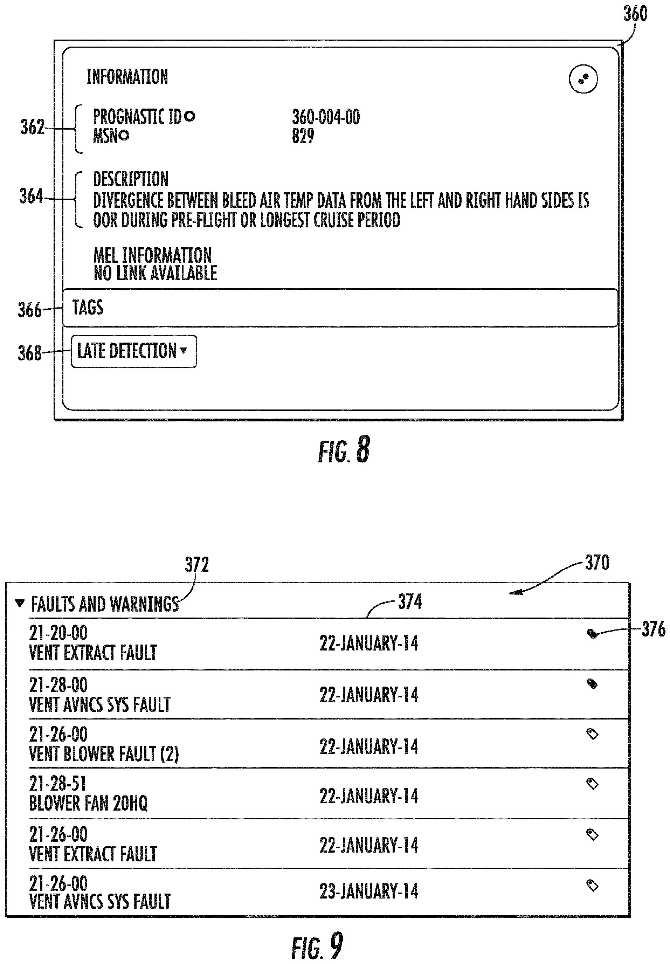

FIG. 8 depicts an example graphical user interface that provides tag alert features for display to a user. For example, when alert information is accessible to a system user, tag information for that alert also can be provided for display. In the particular example of FIG. 8, an information panel 360 includes general information 362 identifying a particular type of prognostic alert (e.g., prognostic ID of 360-004-00), a more detailed description 364 of the prognostic alert (e.g., "Divergence between bleed air temp data from the left and right hand sides is OOR during pre-flight or longest cruise period"), and any tags 366 associated with the particular alert (e.g., a "Late Detection" tag 368.)

FIG. 9 depicts an example graphical user interface that provides faults and warnings features for display to a user. For example, user interface 370 includes a detailed listing of particular faults/warnings 372, corresponding dates 374 on which each fault/warning 372 occurred, and a toggle option 376 next to each fault/warning 372. The toggle option 376 corresponds to a user-selectable interface element such as an icon that can be selected/deselected or a box that can be checked/unchecked. User selection or deselection of the toggle option 376 allows a user to manually mark a fault/warning 372 as relevant or irrelevant to a current alert for which a details page is currently viewed for characterization within user interface 370. Similar toggle option features can be provided to tag maintenance defects and associated actions.

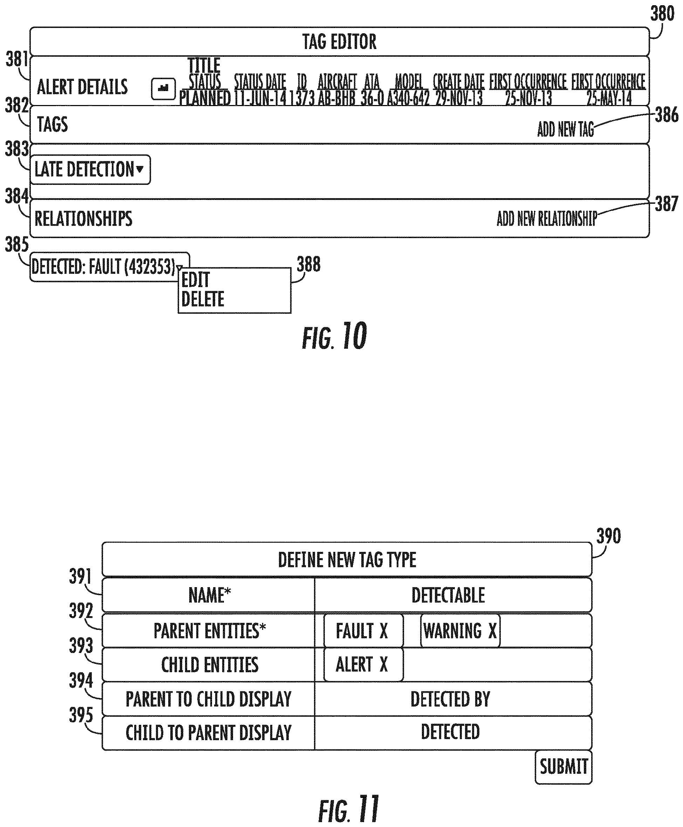

FIG. 10 depicts an example graphical user interface that provides characterization panel features for display to a user as part of a tag editor user interface 380 provided as part of a tag editor. In general tag editor user interface 380 can allow a user to add or edit either tags or relationships for a particular data entity. For instance, the user interface 380 of FIG. 10 shows a tag editor for a particular data entity corresponding to an alert 381 for "Bleed Air Temp Divergence OOR." Tag editor interfaces such as shown in FIG. 10 also can be configured for access from rows within a Faults and Warnings panel, a Maintenance panel, and information panels for other data entities within a system. Existing tags can be provided for display in a "Tags" interface display portion 382, for example "Late Detection" tag 383. Existing relationship rules can be provided for display in a "Relationships" interface display portion 384, for example "Detected Fault" relationship 385. New tags can be added by selecting an interface link 386 to "Add New Tag." New relationships can be added by selecting an interface link 387 to "Add New Relationship." Existing tags and relationships can be edited or deleted using a characterization panel 388, which corresponds to a reusable pop-up interface component which can be accessed by a variety of user selection methods including buttons, context clicks (e.g., right click), etc. Characterization panel 388 can include an "Edit" interface link for editing a particular tag or relationship and a "Delete" interface link for deleting a particular tag or relationship.

FIG. 11 depicts an example graphical user interface 390 that provides features for new tag type creation, such as may be accessed upon selection of the "Add New Tag" interface link 386 of FIG. 10. New tag type creation interface 390 can include a "Name" field 391 for providing a text input for the name of the new tag, a "Parent Entities" field 392 for identifying data entities to be defined in a parent hierarchical relationship with the new tag type, a "Child Entities" field 393 for identifying data entities to be defined in a child hierarchical relationship with the new tag type, a "Parent to Child Display" field 394 for defining display criteria for correlating parent to child relationships, and a "Child to Parent Display" field 395 for defining display criteria for correlating child to parent relationships.

FIGS. 12-14 depict respective flow charts for implementing features and aspects of various methods disclosed herein. Referring more particularly to FIG. 12, method (400) of interrelating multiple data streams includes providing (402) one or more portions of data from a plurality of asset-related data streams as input text to a natural language processing algorithm. In some examples, the asset-related data streams provided at (402) can come from ASN database 102 or other database sources, and natural language processing algorithm can correspond to natural language processing algorithm 116 of FIG. 1. One or more data entities can be identified at (404) within the asset-related data streams provided at (402). Data entity identification at (404) can be implemented in some examples by natural language processing algorithm 116, such as via name entity recognition operation 120. One or more relationships among the data entities identified at (404) can be identified at (406). Relationship identification at (406) can be implemented in some examples by natural language processing algorithm 116, such as via co-reference resolution operation 122 and/or relationship extraction operation 124.

Referring still to FIG. 12, one or more processing rules can be generated at (408) for applying information to the data entities identified at (404) within the asset-related data streams. Processing rules generated at (408) can include tagging rules for associating one or more keywords to one or more data entities identified within the asset-related data streams at (404). Processing rules generated at (408) can additionally or alternatively include relationship rules for identifying relationships among two or more data entities identified within the asset-related data streams at (404). In some examples, tagging rules and/or relationship rules generated at (408) can be implemented as part of business rule processing algorithm 128, such as within the relationship rule application 130 and tagging rule application 132 of FIG. 1. Tagging rules and/or relationship rules can be generated at (408) as part of the rules based engine 148 for implementing a machine learning training loop as depicted in FIG. 2. The one or more processing rules generated at (408) then can be stored at (410) as part of a statistical model for evaluating subsequent portions of asset-related data. The statistical model stored at (410) can be stored as part of data tagging and correlation system 100 or ASN database 102 of FIG. 1 or the processing rules and algorithms 212 depicted in FIG. 3.

Referring still to FIG. 12, features (412-416) generally concern aspects of the disclosed data tagging and correlation systems and methods pertaining to inclusion of user inputs. User instructions can be received at (412) for tagging one or more portions of data from the plurality of asset-related data streams. User instructions can be received from a user interface 156 as shown in FIG. 2 or any of the other user input features disclosed herein. The one or more portions of data tagged in accordance with user instructions received at (412) then can be provided as input to the statistical model at (414). FIG. 2 visually depicts how user-tagged data can ultimately be part of the marked up training data sets extracted at 158 used to update statistical models within the rules based engine 148. One or more additional or updated processing rules can be generated at (416) from the one or more portions of data tagged at (412) in accordance with user instructions. These additional or updated processing rules can be stored as part of the statistical model at (416). The additional or updated processing rules can be stored at (416) as part of data tagging and correlation system 100 or ASN database 102 of FIG. 1 or the processing rules and algorithms 212 depicted in FIG. 3.

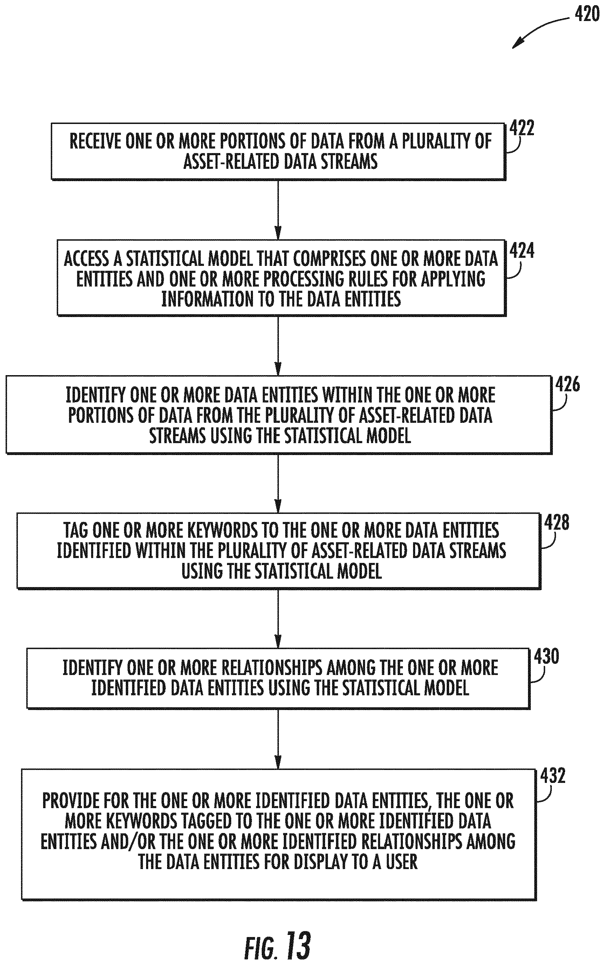

While method (400) of FIG. 12 focuses on the training of a statistical model, including the generation of processing rules for such a model that then can be used to process subsequent data streams, FIG. 13 concerns the subsequent data processing once a statistical model is already trained. As such, method (420) includes receiving (422) one or more portions of data from a plurality of asset-related data streams. In some examples, the data received at (422) can come from ASN database 102 or other database sources. A statistical model is then accessed at (424) that defines one or more data entities and one or more processing rules for applying information to the data entities. The statistical model accessed at (424) can be part of the data tagging and correlation system 100 of FIG. 1, selected portions thereof and/or libraries and datasets that are accessed by the system 100, especially including but not limited to the natural language processing algorithm 116 and the business rule processing algorithm 128. One or more data entities (e.g., aircraft systems and subsystems, part numbers and names, aircraft tail numbers, aviation abbreviations, task numbers, actions, problems, faults, alerts, warnings, etc.) can be identified at (426) within the data. Identification of data entities at (426) can be done within the natural language processing algorithm 116. One or more keywords can be tagged at (428) to the one or more data entities identified at (426). In some examples, tagging of keywords at (428) is part of tagging rules application 132. One or more relationships among identified data entities can be identified and defined at (430), such as can be implemented as part of relationship rules application 130. The one or more identified data entities, one or more tagged keywords and/or one or more identified relationships can be provided for display to a user at (432) and/or otherwise used to perform a maintenance action based on the generated output(s). These items can be provided for display at user interface 156 or in any of the example user interfaces depicted in FIGS. 6-11, respectively. In some examples, method (420) can have an effect of conducting an evaluation on the one or more portions of data received at (422) using the one or more processing rules accessed at (424) to generate an output and perform a maintenance action based at least in part on the output, including the one or more identified data entities and the one or more keywords tagged to the one or more identified data entities.

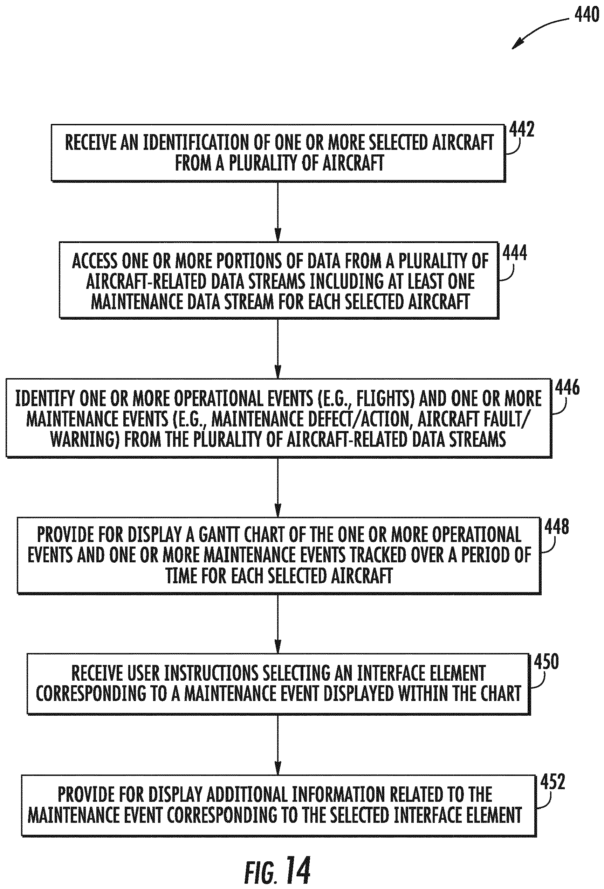

Referring now to FIG. 14, a method (440) is depicted of an example visualization of aggregated maintenance data for a plurality of assets, such as aircraft. Although method (440) is described in the particular context of aircraft and aircraft-related data, it should be appreciated that similar approaches can be used with other assets or fleets of assets. One or more aircraft can be identified at (442) from a plurality of aircraft. For instance, as shown in FIGS. 6 and 7, a selected set of aircraft can be identified by tail number for determining and displaying aggregated data. One or more portions of data from a plurality of aircraft-related data streams can be accessed at (444). Data accessed at (444) can come from an ASN database 102, or other data locations. The aircraft-related data streams can include at least one maintenance data stream for each selected aircraft in order to facilitate subsequent identification of one or more maintenance events.

Referring still to FIG. 14, one or more operational events (e.g., aircraft flights) and one or more maintenance events (e.g., maintenance defects/actions, aircraft faults/warnings, aircraft alerts and the like) can be identified at (446) from the aircraft-related data streams. In some examples, identification of the operational events and/or maintenance events can be implemented by preconfigured data processing algorithms configured to analyze the aircraft-related data. In some examples, identification of the operational events and/or maintenance events can occur by providing the data to a statistical model that is trained by machine learning processes to identify maintenance and operational events based on particular identification of data characteristics. In such examples, identified operational events and/or maintenance events can be identified as outputs from the statistical model.

One or more of the operational events and maintenance events identified at (446) can be provided for display at (448). The events can be tracked over a period of time for each selected aircraft in a chart format such as a Gantt chart. An example of such a chart is shown in the first "Faults and Warnings" interface portion 322 of FIG. 6 or the more particular user interface 330 of FIG. 7. In the example of FIG. 7, the operational events are depicted as bars along a linear timeline, while the maintenance events are depicted as user-selectable icons along the same linear timeline. In some more detailed examples, user instructions indicating selection of one of the operational events or maintenance events provided for display at (448) can be received at (450). Receipt of such instructions at (450) then can trigger a subsequent provision for display at (452) of additional information related to the operational event or maintenance event corresponding to the selected interface element. In some examples, a maintenance action on an aircraft can be performed based at least in part on the one or more operational events and maintenance events identified at (446).

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A computer-implemented method for interrelation of multiple streams of asset-related data associated with one or more aircraft, comprising:
   providing, by one or more processors, one or more portions of data from a plurality of asset-related data streams as input text to a natural language processing engine;
   identifying, by the one or more processors, one or more data entities within the asset-related data streams using the natural language processing engine;
   generating, by the one or more processors, one or more processing rules for applying information to the data entities identified within the asset-related data streams; and
   storing, by the one or more processors, the one or more processing rules as part of a statistical model for evaluating subsequent portions of asset-related data associated with the data for performance of one or more maintenance events.
2. The computer-implemented method of clause 1, further comprising: receiving, by the one or more processors, user instructions for tagging one or more portions of data from the plurality of asset-related data streams; and
   providing, by the one or more processors, the one or more portions of data tagged in accordance with user instructions as input to the statistical model.
3. The computer-implemented method of any preceding clause, wherein the user instructions for tagging one or more portions of data from the plurality of asset-related data streams comprise instructions to associate one or more keywords to one or more data entities identified within the asset-related data streams or to identify relationships among two or more data entities identified within the asset-related data streams.
4. The computer-implemented method of any preceding clause, further comprising generating, by the one or more processors, one or more additional processing rules from the one or more portions of data tagged in accordance with user instructions.
5. The computer-implemented method of any preceding clause, wherein the statistical model identifies processing rules as training classifiers for processing of subsequent portions of asset-related data using a machine learning process.
6. The computer-implemented method of any preceding clause, wherein the one or more processing rules comprise tagging rules for associating one or more keywords to one or more data entities identified within the asset-related data streams.
7. The computer-implemented method of any preceding clause, wherein the one or more processing rules comprise relationship rules for identifying relationships among two or more data entities identified within the asset-related data streams.
8. The computer-implemented method of any preceding clause, wherein the asset-related data comprises aircraft-related data including one or more of aircraft faults and warnings data, post-flight report data, or aircraft maintenance report data.
9. The computer-implemented method of any preceding clause, further comprising identifying, by the one or more processors, one or more relationships among the one or more data entities identified within the asset-related data streams, wherein identifying one or more relationships is implemented at least in part using the natural language processing engine.
10. A system for interrelation of multiple streams of asset-related data associated with one or more aircraft, comprising:
   one or more processors; and
   one or more memory devices, the one or more memory devices storing computer-readable instructions that when executed by the one or more processors cause the one or more processors to perform operations, the operations comprising:
      providing one or more portions of data from a plurality of asset-related data streams associated with one or more aircraft as input text to a natural language processing engine;
      identifying one or more data entities within the asset-related data streams using the natural language processing engine;
      generating one or more processing rules for applying information to the data entities identified within the asset-related data streams; and
      storing the one or more processing rules as part of a statistical model for evaluating subsequent portions of asset-related data for the performance of one or more maintenance events.
11. The system of any preceding clause, wherein the operations further comprise:
   receiving user instructions for tagging one or more portions of data from the plurality of asset-related data streams; and
   providing the one more portions of data tagged in accordance with user instructions as input to the statistical model.
12. The system of any preceding clause, wherein the user instructions for tagging one or more portions of data from the plurality of asset-related data streams comprise instructions to associate one or more keywords to one or more data entities identified within the asset-related data streams or to identify relationships among two or more data entities identified within the asset-related data streams.
13. The system of any preceding clause, wherein the operations further comprise generating one or more additional processing rules from the one or more portions of data tagged in accordance with user instructions.
14. The system of any preceding clause, wherein the statistical model identifies processing rules as training classifiers for processing of subsequent portions of asset-related data using a machine learning process.
15. The system of any preceding clause, wherein the one or more processing rules comprise one or more tagging rules for associating one or more keywords to one or more data entities identified within the asset-related data streams and one or more relationship rules for identifying relationships among two or more data entities identified within the asset-related data streams.
16. A computer-implemented method for processing multiple streams of asset-related data, comprising:
   receiving, by one or more processors, one or more portions of data from a plurality of asset-related data streams;
   accessing, by the one or more processors, a statistical model that comprises one or more data entities and one or more processing rules for applying information to the data entities;
   identifying, by the one or more processors, one or more data entities within the one or more portions of data from the plurality of asset-related data streams using the statistical model;
   automatically tagging, by the one or more processors, one or more keywords to the one or more data entities identified within the plurality of asset-related data streams using the statistical model; and
   providing, using the one or more processors, the one or more identified data entities and the one or more keywords tagged to the one or more identified data entities for display to a user.
17. The computer-implemented method of any preceding clause, further comprising:
   identifying, using the one or more processors, one or more relationships among the one or more identified data entities using the statistical model; and
   providing, using the one or more processors, the one or more identified relationships for display to a user.
18. The computer-implemented method of any preceding clause, wherein the asset-related data comprises aircraft-related data including one or more of aircraft faults and warnings data, post-flight report data, or aircraft maintenance report data.
19. The computer-implemented method of any preceding clause, wherein the statistical model is trained using a machine learning process to identify data entities and processing rules from datasets of tagged asset-related data.
20. The computer-implemented method of any preceding clause, further comprising performing a maintenance action based at least in part on the one or more identified data entities and the one or more keywords tagged to the one or more identified data entities.

## Claims

1. A computer-implemented method (400) for interrelation of multiple streams of asset-related data associated with one or more aircraft, comprising:
providing, by one or more processors, one or more portions of data from a plurality of asset-related data streams as input text to a natural language processing engine (402);
identifying, by the one or more processors, one or more data entities within the asset-related data streams using the natural language processing engine (404);
generating, by the one or more processors, one or more processing rules for applying information to the data entities identified within the asset-related data streams (408); and
storing, by the one or more processors, the one or more processing rules as part of a statistical model for evaluating subsequent portions of asset-related data associated with the data for performance of one or more maintenance events (410).

2. The computer-implemented method of claim 1, further comprising: receiving, by the one or more processors, user instructions for tagging one or more portions of data from the plurality of asset-related data streams (412); and
providing, by the one or more processors, the one or more portions of data tagged in accordance with user instructions as input to the statistical model (414).

3. The computer-implemented method of claim 2, wherein the user instructions for tagging one or more portions of data from the plurality of asset-related data streams comprise instructions to associate one or more keywords to one or more data entities identified within the asset-related data streams or to identify relationships among two or more data entities identified within the asset-related data streams.

4. The computer-implemented method of either of claim 2 or 3, further comprising generating, by the one or more processors, one or more additional processing rules from the one or more portions of data tagged in accordance with user instructions (416).

5. The computer-implemented method of any preceding claim, wherein the statistical model identifies processing rules as training classifiers for processing of subsequent portions of asset-related data using a machine learning process.

6. The computer-implemented method of any preceding claim, wherein the one or more processing rules comprise tagging rules for associating one or more keywords to one or more data entities identified within the asset-related data streams.

7. The computer-implemented method of any preceding claim, wherein the one or more processing rules comprise relationship rules for identifying relationships among two or more data entities identified within the asset-related data streams.

8. The computer-implemented method of any preceding claim, wherein the asset-related data comprises aircraft-related data including one or more of aircraft faults and warnings data, post-flight report data, or aircraft maintenance report data.

9. The computer-implemented method of any preceding claim, further comprising identifying, by the one or more processors, one or more relationships among the one or more data entities identified within the asset-related data streams, wherein identifying one or more relationships is implemented at least in part using the natural language processing engine (406).

10. A computer-implemented method (420) for processing multiple streams of asset-related data, comprising:
receiving, by one or more processors, one or more portions of data from a plurality of asset-related data streams (422);
accessing, by the one or more processors, a statistical model that comprises one or more data entities and one or more processing rules for applying information to the data entities (424);
identifying, by the one or more processors, one or more data entities within the one or more portions of data from the plurality of asset-related data streams using the statistical model (426);
automatically tagging, by the one or more processors, one or more keywords to the one or more data entities identified within the plurality of asset-related data streams using the statistical model (428); and
providing, using the one or more processors, the one or more identified data entities and the one or more keywords tagged to the one or more identified data entities for display to a user (432).

11. The computer-implemented method of claim 10, further comprising:
identifying, using the one or more processors, one or more relationships among the one or more identified data entities using the statistical model (430); and
providing, using the one or more processors, the one or more identified relationships for display to a user (432).

12. The computer-implemented method of either of claim 10 or 11, wherein the asset-related data comprises aircraft-related data including one or more of aircraft faults and warnings data, post-flight report data, or aircraft maintenance report data.

13. The computer-implemented method of any of claims 10 to 12, wherein the statistical model is trained using a machine learning process to identify data entities and processing rules from datasets of tagged asset-related data.

14. The computer-implemented method of any of claims 10 to 13, further comprising performing a maintenance action based at least in part on the one or more identified data entities and the one or more keywords tagged to the one or more identified data entities.

15. A computing system (200), comprising:
one or more processors (206, 226); and
one or more memory devices (208, 228), the one or more memory devices (208, 228) storing computer-readable instructions (210, 234) that when executed by the one or more processors (206, 226) cause the one or more processors (206, 226) to perform operations, the operations comprising steps as implemented in a method as set forth in any of the preceding claims.
